Europäisches Patentamt

European Patent Office

Office européen des brevets

(11) Publication number: **0 238 184 B1**

# EUROPEAN PATENT SPECIFICATION

(45) Date of publication of patent specification: **30.10.91**  (51) Int. Cl.5: **A01N 25/28**, A01N 53/00

(21) Application number: **87301065.6**

(22) Date of filing: **06.02.87**

The file contains technical information submitted after the application was filed and not included in this specification

(54) **Pesticidal formulations.**

(30) Priority: **07.02.86 GB 8603061**

(43) Date of publication of application:
**23.09.87 Bulletin 87/39**

(45) Publication of the grant of the patent:
**30.10.91 Bulletin 91/44**

(84) Designated Contracting States:
**AT BE CH DE ES FR GB GR IT LI LU NL SE**

(56) References cited:
**EP-A- 0 008 207       EP-A- 0 017 409**
**EP-A- 0 039 441       DE-A- 1 960 430**
**DE-A- 2 017 356       DE-A- 2 017 808**
**DE-A- 2 052 428       DE-A- 2 207 440**
**FR-A- 2 306 634       US-A- 3 928 564**
**US-A- 4 497 793**

(73) Proprietor: **THE WELLCOME FOUNDATION LIMITED**
**Unicorn House 160 Euston Road**
**London NW1 2BP(GB)**

(72) Inventor: **Chadwick, Peter Robin**
**THE WELLCOME RESEARCH LABORATORIES**
**Berkhamsted Hertfordshire(GB)**
Inventor: **Jeffries, David Alan**
**THE WELLCOME RESEARCH LABORATORIES**
**Berkhamsted Hertfordshire(GB)**

(74) Representative: **Rollins, Anthony John et al**
**Group Patents & Agreements The Wellcome Foundation Ltd Langley Court**
**Beckenham Kent BR3 3BS(GB)**

## Description

This invention relates to pesticidal formulations.

It is known to encapsulate pesticidal compounds in small "microcapsules" of material, to provide a dry flowable formulation and/or to obtain a formulation having a longer effective life. The latter effect is obtained because the microcapsules protect the pesticide from degradation, but themselves slowly degrade, or are broken by applied pressure, to release the pesticide over a period. Alternatively, the pesticide may slowly diffuse through the walls of the microcapsules.

In some prior art processes, the microcapsules are not separated from the reaction mixture and small amounts of non-encapsulated pesticides may therefore be present in the product. Similarly, small amounts of unencapsulated pesticide may arise due to leakage as described above. In the context of compositions which do not have a pyrethroid both inside and outside the microcapsules, there have been proposals to deliberately have a certain level of non-encapsulated pesticide - see, for example, EP-A-8 207 (du Pont; encapsulated methomyl with inter alia non-encapsulated permethrin at a ratio of 1:10 to 10:10) and EP-A-17 409 (Monsanto).

It has now been found to be advantageous to provide a formulation comprising microcapsules containing a pyrethroid and non-encapsulated pyrethroid.

Accordingly, one aspect of the present invention provides a pesticidal formulation for application to a surface over which crawling insect or acarine pests will crawl, the formulation comprising a microencapsulated pyrethroid and a non-microencapsulated pyrethroid wherein, in relation to the total amount of pyrethroid in the formulation, the proportion which is non-encapsulated is at least 5%.

The terms "microencapsulated" or "microcapsule" are used in this specification to refer to capsules having a diameter of less than 4 mm, particularly less than 2 mm. Commonly, however, microcapsules have an average diameter of between 1 micron and 100 microns.

The microencapsulated pyrethroid may be the same as or different from the non-encapsulated pyrethroid. More than one pyrethroid may be encapsulated, and more than one pyrethroid may be non-microencapsulated. The encapsulated pyrethroid(s) may be in one or more than one type of microcapsule.

In relation to the total amount of pyrethroid in the formulation, the proportion which is non-encapsulated is preferably at least 10%. 15 to 30%, particularly 25%, is preferred. Upper limits of 50%, especially 40% and more especially 30%, are particularly preferred, in conjunction with any of the said lower limits.

The microcapsules may be formed by any known means, for example by the so-called "Pennwalt" method described in UK Patent Specification No. 1 091 141, the entire contents of which are incorporated herein by reference.

The non-encapsulated material may be a wettable powder, an emulsifiable concentrate, a microemulsion, a dust or any other suitable form.

Any known pyrethroid may be used in the formulation, for example permethrin, deltamethrin, cyhalothrin or cypermethrin.

The total proportion of pyrethroid in the formulation will depend upon the pyrethroid(s) in question and the use to which the formulation is being put, but is generally between 0.001 and 90%, typically between 0.01 and 90%, preferably (in the case of permethrin) 10 to 50%, conveniently 20-40%. In the case of other pesticides, these amounts may be varied to suit the potency of the pesticide. For example, deltamethrin or cypermethrin might be used at 1 to 10%, conveniently 2 to 4%. Other excipients known in the art may also be used, for example diluents, carriers, dyes, lubricants, stabilisers, surfactants and, in particular, synergists such as piperonyl butoxide.

Formulations in accordance with the invention may be used against insect and acarine pests and are particularly suitable for coating surfaces such as wood, concrete, brickwood, paint, plaster or metal in order to provide a long-lasting residual action or for use in bait formulations. Surfaces in buildings may be treated to combat crawling insects such as cockroaches or ants, or flying insects, such as houseflies or mosquitoes, when they walk on the treated surface.

The inclusion of non-encapsulated pesticide provides an immediate dose of such pesticide even before the encapsulated pesticide becomes available, and it has been found that careful control of specific insect populations can be more easily achieved. For example, a large initial dose of pesticide can be used to control, flush out or activate all or almost all of the active adult population of, say, a population of cockroaches, with a continued lower dose from the encapsulated material being provided thereafter to control immigration of adults and emergence of nymphs. A knock-down agent may be used as the non-encapsulated pyrethroid, with a kill agent inside the microcapsules.

It has also been found that the presence of the pesticide outside the microcapsule stabilises the pesticide inside the capsule, and the capsule itself, particularly when the pesticides are the same, thus prolonging the active life of the encapsulated material.

Formulations in accordance with the invention may take the form of dry granular matter or aqueous suspensions. Alternatively, a water-soluble wall material way be used in a non-aqueous solvent. The formulations may be packaged in any convenient way, for example in drums or sachets, and would normally be diluted before use. Conveniently, the (optionally diluted) formulation is sprayed onto the surface to be treated, to the point of "run off", by means of compression sprayers, hydraulic sprayers, mist blowers or the like.

The following non-limiting examples illustrate specific embodiments of the invention.

Example 1

An oil-in-water encapsulation with a polyurea-polyamide skin represents production of a copolymer (strengthened by cross-linking) by interfacial polycondensation. Charges were prepared as follows:

| In flask: | 200 ml 0.5% aqueous "Elvanol 50-42" solution |
| In 1st funnel: | 100 ml xylene |
| | 15 ml toluene 2,4-diisocyanate |
| | 2 ml trimesoyl trichloride (for cross-linking) |
| | 120 g permethrin plus 50 ml "Solvesso 200" |
| In 2nd funnel: | 10 g ethylenediamine |
| | 5 g diethylenetriamine |
| | 10 g sodium carbonate, monohydrate |
| | 80 ml distilled water |

["Elvanol" (RTM) is a protective colloid comprising polyvinyl alcohol available from DuPont, Wilmington, Delaware; "Solvesso 200" is a blend of aromatic hydrocarbons available from Exxon.]

During the addition from the first funnel, which was rapidly effected, the mixture was strongly agitated to form visible droplets, the agitation being slowed down following completion of the first addition. Slow agitation was continued during the second, similarly rapid, addition. Contents were stirred for one hour and then filtered. Capsules of xylene were obtained, containing permethrin. The microcapsules were mixed with permethrin and "Etocas 29" surfactant (a castor oil derivative available from Croda Chemicals, Goole, UK) in water to give a 25% permethrin dilutable aqueous suspension having 20% permethrin inside the microcapsules and 5% outside.

Example 2

The procedure of Example 1 was followed, except that the trimesoyl trichloride was omitted and toluene 2,6-diisocyanate was used 20/80 with the toluene 2,4-diisocyanate to give a total of 15 ml as before. A polyurea wall is thereby formed. To form an emulsifiable concentrate outside the capsules, a blend of 5% permethrin, 2-5% nonylphenol ethylene oxide condensates 2-5% calcium dodecyl benzene sulphonate and about 5% of "Solvesso 200" was made, the percentages relating to the total formulation when the e.c. is added to the microcapsule preparation

Biological Test

The formulation of Example 1 was diluted with water 160X and sprayed onto male Blattella germanica. The time for knockdown of 50% of the insects ($KT_{50}$) was 6.6 minutes, and all of the insects were dead after day 1.

Claims

1. A pesticidal formulation for application to a surface over which crawling insect or acarine pests will crawl, the formulation comprising a microencapsulated pyrethroid and a non-microencapsulated pyrethroid wherein, in relation to the total amount of pyrethroid in the formulation, the proportion which is non-encapsulated is at least 5%.

2. A formulation according to Claim 1 wherein the pyrethroid inside the microcapsules is the same as the pyrethroid outside the microcapsules.

3. A formulation according to Claims 1 or 2 wherein, in relation to the total amount of pyrethroid in the formulation, the proportion which is non-encapsulated is at least 10%.

4. A formulation according to Claim 3 wherein, in relation to the total amount of pyrethroid in the formulation, the proportion which is non-encapsulated is 15-25%.

5. A formulation according to any one of the preceding claims wherein the microcapsules are of polyurea and/or polyamide.

6. A formulation according to any one of the preceding claims wherein the pyrethroid is in each case permethrin.

7. A formulation according to any one of the preceding claims wherein the formulation has a total amount of pyrethroid equivalent to 20-40% permethrin.

8. A method of controlling insect or acarine pests by applying a formulation according to any one of the preceding claims to a surface over which the pests will crawl.

9. A process for preparing a formulation according to any one of Claims 1 to 7 by microencapsulating a pyrethroid and mixing the preparation so formed with a further pyrethroid, or a further amount of the same pyrethroid, in conjunction with one or more suitable diluents, solvents or carriers.

**Revendications**

1. Composition pesticide pour l'application sur une surface sur laquelle des insectes rampants ou acariens nuisibles vont ramper, la composition comprenant un pyréthroïde microencapsulé et un pyréthroïde non microencapsulé, dans laquelle, par rapport à la quantité totale de pyréthroïde dans la composition, la proportion qui est non encapsulée est d'au moins 5%.

2. Composition suivant la revendication 1, dans laquelle le pyréthroïde à l'intérieur des microcapsules est le même que le pyréthroïde à l'extérieur des microcapsules.

3. Composition suivant la revendication 1 ou 2, dans laquelle, par rapport à la quantité totale de pyréthroïde dans la composition, la proportion qui est non encapsulée est d'au moins 10%.

4. Composition suivant la revendication 3, dans laquelle, par rapport à la quantité totale de pyréthroïde dans la composition, la proportion qui est non encapsulée est de 15 à 25%.

5. Composition suivant l'une quelconque des revendications précédentes, dans laquelle les microcapsules sont en polyurée et/ou polyamide.

6. Composition suivant l'une quelconque des revendications précédentes, dans laquelle le pyréthroïde est dans chaque cas la perméthrine.

7. Composition suivant l'une quelconque des revendications précédentes, dans laquelle la composition contient une quantité totale de pyréthroïde qui est l'équivalent de 20 à 40% de perméthrine.

8. Procédé pour lutter contre des insectes ou acariens nuisibles par application d'une composition suivant l'une quelconque des revendications précédentes sur une surface sur laquelle ces insectes ou acariens nuisibles vont ramper.

9. Procédé de préparation d'une composition suivant l'une quelconque des revendications 1 à 7, par microencapsulement d'un pyréthroïde et mélange de la préparation résultante avec un nouveau pyréthroïde ou une nouvelle quantité du même pyréthroïde, conjointement avec un ou plusieurs diluants, solvants ou excipients appropriés.

**Patentansprüche**

1. Pestizide Formulierung zum Aufbringen auf eine Oberfläche über die kriechende Insekten oder Milben-Schädlinge kriechen werden, wobei die Formulierung ein mikroeingekapseltes Pyrethroid und ein nicht-mikroeingekapseltes Pyrethroid einschließt, worin der nicht-eingekapselte Anteil in Beziehung zur Gesamtmenge des Pyrethroids in der Formulierung wenigstens 5 % beträgt.

2. Formulierung gemäß Anspruch 1, worin das Pyrethroid im Inneren der Mikrokapseln dasselbe ist wie das Pyrethroid außerhalb der Mikrokapseln.

3. Formulierung gemäß Anspruch 1 oder 2, worin der nichteingekapselte Anteil in Beziehung zur Gesamtmenge des Pyrethroids in der Formulierung wenigstens 10 % beträgt.

4. Formulierung gemäß Anspruch 3, worin der nicht-eingekapselte Anteil in Beziehung zur Gesamtmenge des Pyrethroids in der Formulierung 15 bis 25 % beträgt.

5. Formulierung gemäß einem der vorhergehenden Ansprüche, wobei die Mikrokapseln aus Polyharnstoff und/oder Polyamid bestehen.

6. Formulierung gemäß einem der vorhergehenden Ansprüche, worin das Pyrethroid in jedem Fall Permethrin ist.

7. Formulierung gemäß einem der vorhergehenden Ansprüche, worin die Formulierung eine Gesamtmenge an Pyrethroid entsprechend 20 bis 40 % Permethrin aufweist.

8. Verfahren zur Bekämpfung von Insekten oder Milben-Schädlingen durch Aufbringen einer Formulierung gemäß einem der vorhergehenden Ansprüche auf eine Oberfläche, über die die Schädlinge kriechen werden.

9. Verfahren zur Herstellung einer Formulierung gemäß einem der Ansprüche 1 bis 7 durch Mikroeinkapseln eines Pyrethroids und Mischen der erhaltenen Zubereitung mit einem weiteren Pyrethroid, oder einer weiteren Menge desselben Pyrethroids, zusammen mit einem oder mehreren geeigneten Verdünnungsmitteln, Lösungsmitteln oder Trägern.